# EUROPEAN PATENT APPLICATION

(11) **EP 2 175 317 A1**
(43) Date of publication of application: **14.04.2010**
(21) Application number: 09012651.7
(22) Date of filing: 06.10.2009
(51) Int. Cl.: G03B 21/20, H04N 5/74, H04N 9/31

(54) **Image display device**

(30) Priority: 07.10.2008 JP 2008261064; 04.12.2008 JP 2008310314
(71) Applicant: SANYO ELECTRIC CO., LTD., Moriguchi-shi Osaka 531-0071 (JP)
(72) Inventor: Yoshimura, Taichi, Moriguchi-shi Osaka (JP); Kanbara, Toshimasa, Moriguchi-shi Osaka (JP)
(74) Representative: Glawe, Delfs, Moll

(57) **Abstract**

An image display device of the present invention includes two lamps A and B as light sources. A mirror is pivotally moved to supply light from the lamp A, B to an optical system. In the case where the lamp A is used, the mirror is temporarily driven in the direction of lamp B before the lamp A is activated. Thereafter, the mirror is returned to the position where the lamp A is used, and is pressed against a restraining member. Thereby, the mirror is positioned at a proper angle with respect to the light from the lamp A when the lamp A is activated.

## Description

*This application claims priority under 35 U.S.C. Section 119 of Japanese Patent Application No.* 2008-261064 filed October 7, 2008*, entitled "IMAGE DISPLAY DEVICE", and Japanese Patent Application No.* 2008-310314 filed December 4, 2008*, entitled "IMAGE DISPLAY DEVICE". The disclosures of the above applications are incorporated herein by reference.*

### BACKGROUND OF THE INVENTION

### 1. Field of the Invention

The present invention relates to an image display device, and more particularly to an image display device having a plurality of light sources.

### 2. Disclosure of Related Art

Nowadays, a projection image display device (hereinafter, referred to as a "projector") for enlarging and projecting an image onto a screen has been commercialized and widely spread. Generally, in the projector, a lamp is used as a light source, and light from the lamp is modulated by an imager for being projected onto a screen.

In use of the projector, if the lamp is short-circuited during a projection, display of an image is interrupted. To avoid such a drawback, there is proposed an arrangement of preparing two lamps in advance. If one of the lamps in use is short-circuited, the other lamp will be used.

In the above arrangement, the two lamps are disposed opposite to each other, and a mirror unit is disposed between the lamps. The mirror unit has a pivotable mirror. When a first lamp is used, the mirror is positioned to a first position facing the first lamp; and when a second lamp is used, the mirror is positioned to a second position facing the second lamp.

In the case where the lamps are switched over by using the mirror, it is necessary to tilt the mirror at a proper angle with respect to light from the corresponding lamp. Specifically, if the tilt angle of the mirror is displaced from a proper angle, unevenness of colors and deterioration of illuminance may occur in a projected image. In view of this, in the above arrangement, it is necessary to precisely position the mirror to the first position or the second position.

In the case where a projection is suspended in a state the mirror is positioned to the first position, and the projector is transported to another place in this state, the mirror may be displaced from the first position resulting from an impact, a vibration, or a like force exerted on the projector during the transportation. In such a case, even if the first lamp is turned on after the projector has been transported to another place, the tilt angle of the mirror may be improper. As a result, unevenness of colors and deterioration of illuminance may occur in a projected image.

### SUMMARY OF THE INVENTION

An image display device according to a first aspect of the present invention includes: an illuminating device; an imager for modulating illumination light generated by the illuminating device in accordance with an image signal; a light guiding optical system for guiding the illumination light from the illuminating device to the imager; and a controller for controlling the illuminating device. In this arrangement, the illuminating device includes: a first light source for emitting first light; a second light source for emitting second light, and disposed at such a position as to overlap the second light with the first light; and a mirror unit for supplying one of the first light and the second light to the light guiding optical system as the illumination light. The mirror unit pivotally supports a mirror. The mirror is disposed at such a position that the first light and the second light are overlapped with each other. The mirror is pivotally moved between a first position where the first light is reflected in a targeted direction as the illumination light, and a second position where the second light is reflected in the targeted direction as the illumination light. The mirror unit defines a range between the first position and the second position, as a pivotal range of the mirror. The controller causes the mirror to pivotally move toward the second position before the first light source is activated, and then causes the mirror to pivotally move toward the first position to position the mirror to the first position.

In the image display device according to the first aspect, the mirror is temporarily swung to the second position opposite to the first position, before the first light source is activated, and thereafter, is returned and positioned to the first position. Accordingly, the mirror can be properly positioned to the first position. Thus, the mirror can be positioned at a proper angle with respect to the light from the first light source.

In the image display device according to the first aspect, the controller may be configured to suspend an operation of the mirror unit, if it is judged that the mirror has not reached a predetermined detection position when pivotally moved toward the second position.

According to the above arrangement, since a projection is suspended by suspending the operation of the mirror unit, the user can be notified that a failure has occurred in the image display device. Then, the user can take a proper measure to remove the failure relating to the mirror unit by checking the image display device. It is preferable to output an alert indicating that proper pivotal movement of the mirror toward the second position is disabled in order to more securely notify the user of the failure relating to the mirror unit.

In the image display device according to the first aspect, the controller may be configured to cause the mirror to pivotally move toward the first position to position the mirror to the first position, if it is judged that the mirror has not reached a predetermined detection position in pivotally moved toward the second position, and output an alert indicating that proper pivotal movement of the mirror toward the second position is disabled.

According to the above arrangement, even if there is a failure relating to a pivotal movement of the mirror toward the second position, a projection using the first light source is enabled. Further, the user can be notified of the failure in advance. In the case where the first light source is short-circuited during a projection by the first light source, the user can be notified that projection by switching to the second light source cannot be continued. Thus, the user is allowed to determine whether the projection by the first light source should be continued, or a measure to remove the failure relating to the mirror unit should be taken.

In the image display device according to the first aspect, the controller may be configured to cause the mirror to continue the pivotal movement thereof during a predetermined period after the mirror has reached the first position, in pivotally moving the mirror toward the first position to position the mirror to the first position.

According to the above arrangement, since the mirror is directly or indirectly pressed against a member to locate the mirror to the first position, the mirror can be securely positioned to the first position. Thus, the mirror can be properly positioned with respect to the light from the first light source.

In the case where the pivotal movement of the mirror is continued during the predetermined period after the mirror has reached the first position, preferably, a transmission mechanism for transmitting a driving force from a drive source to the mirror may have a torque limiter. In this arrangement, since the driving force to be applied to the mirror while the mirror is pressed against the first position can be absorbed by the torque limiter, a damage of the drive source can be prevented, and an angle displacement of the mirror resulting from distortion of a mirror holder can be prevented.

An image display device according to a second aspect of the present invention includes: an illuminating device; an imager for modulating illumination light generated by the illuminating device in accordance with an image signal; a light guiding optical system for guiding the illumination light from the illuminating device to the imager; and a controller for controlling the illuminating device. In this arrangement, the illuminating device includes: a first light source for emitting first light; a second light source for emitting second light, and disposed at such a position as to overlap the second light with the first light; and a mirror unit for supplying one of the first light and the second light to the light guiding optical system as the illumination light. The mirror unit pivotally supports a mirror. The mirror is disposed at such a position that the first light and the second light are overlapped with each other. The mirror is pivotally moved between a first position where the first light is reflected in a targeted direction as the illumination light, and a second position where the second light is reflected in the targeted direction as the illumination light. The mirror unit defines a range between the first position and the second position, as a pivotal range of the mirror. The controller causes the mirror to pivotally move toward the first position before the first light source is activated, and then causes the mirror to continue the pivotal movement thereof during a predetermined period after the mirror has reached the first position.

In the image display device according to the second aspect, the mirror is directly or indirectly pressed against a member to locate the mirror to the first position before the first light source is activated. Accordingly, the mirror can be securely positioned to the first position. Thus, the mirror can be properly positioned with respect to the light from the first light source.

In the case where the pivotal movement of the mirror is continued during the predetermined period after the mirror has reached the first position, as described above, preferably, a transmission mechanism for transmitting a driving force from a drive source to the mirror may have a torque limiter. In this arrangement, since the driving force to be applied to the mirror while the mirror is pressed against at the first position can be absorbed by the torque limiter, a damage of the drive source resulting from overload can be prevented, and an angle displacement of the mirror resulting from distortion of a mirror holder can be prevented.

### BRIEF DESCRIPTION OF THE DRAWINGS

These and other objects, and novel features of the present invention will become more apparent upon reading the following detailed description of the embodiment along with the accompanying drawings.
FIG. 1 is a perspective view showing an appearance of a projector in an embodiment of the present invention.
FIG. 2 is a diagram showing an arrangement of an optical engine in the embodiment.
FIG. 3 is an exploded perspective view showing an arrangement of a mirror unit in the embodiment.
FIGS. 4A and 4B are a bottom plan view and a top plan view showing an arrangement of the mirror unit in the embodiment, respectively, and FIG. 4C is a sectional view showing an arrangement of a torque limiter in the embodiment.
FIGS. 5A and 5B are perspective views showing an arrangement of the mirror unit in the embodiment.
FIG. 6 is a diagram showing a circuit configuration of the projector in the embodiment.
FIG. 7 is a flowchart showing a startup control of the projector in the embodiment.
FIG. 8 is a flowchart showing a modification of the startup control of the projector in the embodiment.
FIG. 9 is a flowchart showing another modification of the startup control of the projector in the embodiment.
FIG. 10 is a flowchart showing yet another modification of the startup control of the projector in the embodiment.
FIG. 11 is a flowchart showing still another modification of the startup control of the projector in the embodiment.
FIG. 12 is a perspective view showing a modification of an adjuster in the embodiment.
FIG. 13 is a diagram showing a modification of the optical engine in the embodiment.

The drawings are provided solely for describing the present invention, and do not limit the scope of the present invention.

### DESCRIPTION OF PREFERRED EMBODIMENTS

In the following, an arrangement of a projector in an embodiment of the present invention is described referring to the drawings.

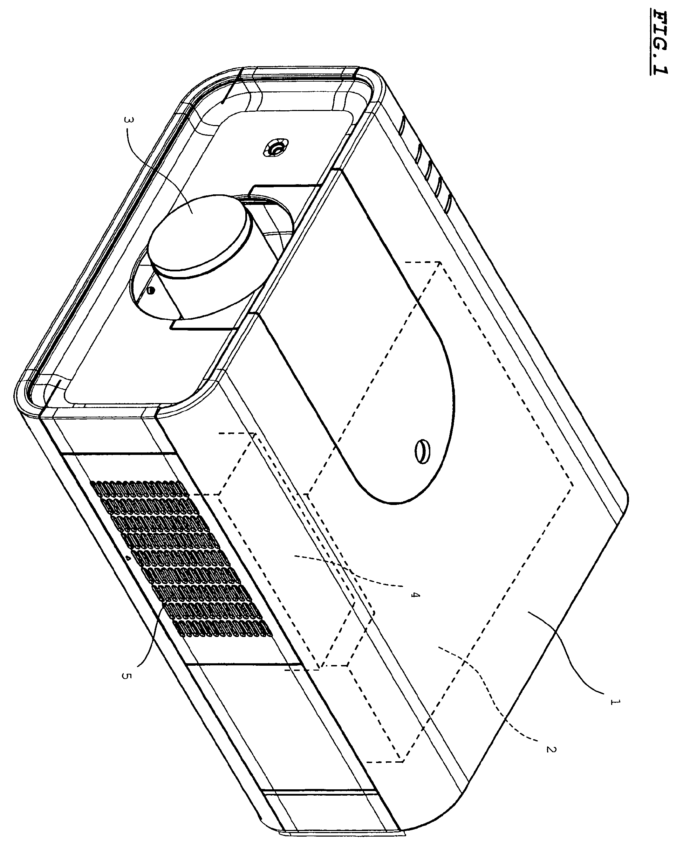

FIG. 1 is a diagram (external perspective view) showing an arrangement of a projector in an embodiment of the present invention. The projector includes a cabinet 1. The cabinet 1 has a substantially rectangular parallelepiped shape with a small size in height direction thereof and a large size in depth direction thereof. An air inlet 5 is formed on the side of the cabinet 1 to draw the external air into the cabinet 1.

The cabinet 1 is internally provided with an optical engine 2, a projection lens 3, and a cooling device 4. The optical engine 2 generates light (image light) modulated by an image signal. The projection lens 3 is mounted on the optical engine 2, with a front part of the projection lens 3 being exposed through a front wall of the cabinet 1. Image light generated by the optical engine 2 is projected onto a screen plane disposed in front of the projector through the projection lens 3. The cooling device 4 draws in the external air through the air inlet 5, and supplies the external air to the optical engine 2 as cooling air.

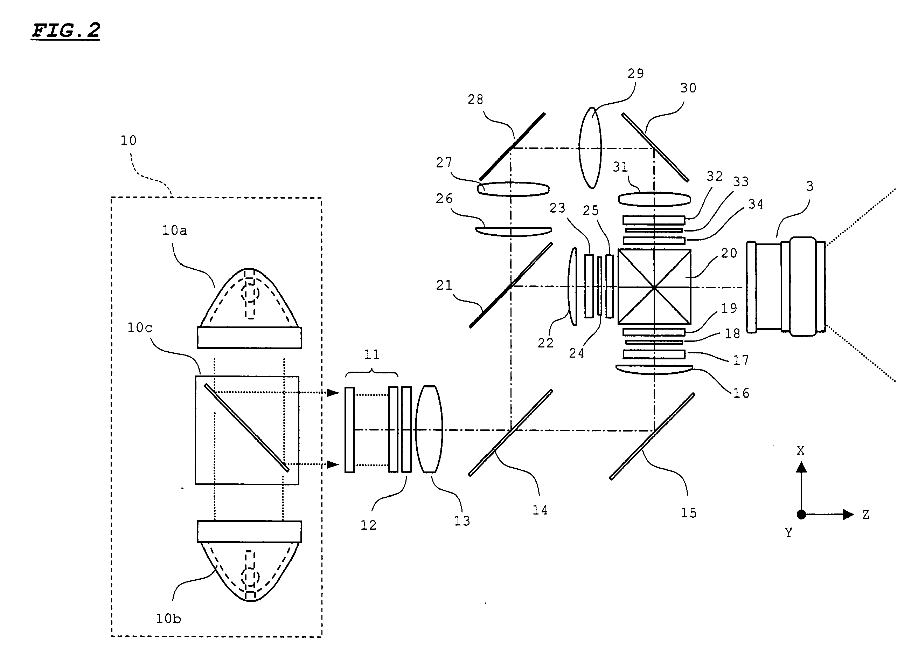

FIG. 2 is a diagram showing an arrangement of the optical engine 2. Referring to FIG. 2, the reference numeral 10 indicates an illuminating device having two lamps 10a and 10b, and a mirror unit 10c. The lamp 10a, 10b is constituted of an ultrahigh pressure mercury lamp, a metal halide lamp, a xenon lamp, or a like device. Light from the lamp 10a, 10b is emitted as substantially parallel light by a function of a reflector.

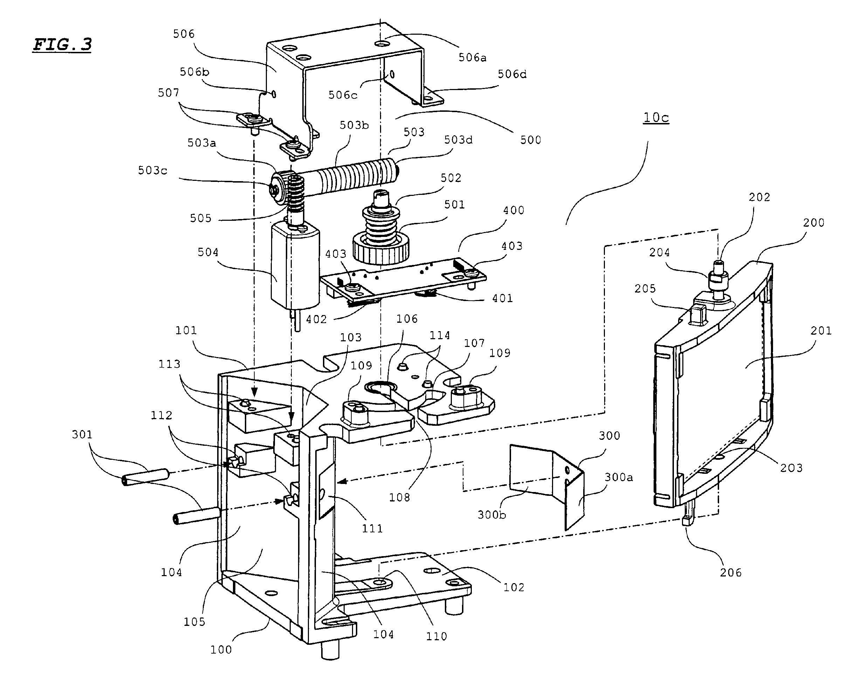

The mirror unit 10c has a mirror which can pivotally move parallel to the X-Z plane in FIG. 2. The mirror is pivotally moved so that light from the lamp 10a is guided to a fly-eye integrator 11 at the time of activation of the lamp 10a, and light from the lamp 10b is guided to the fly-eye integrator 11 at the time of activation of the lamp 10b. The arrangement of the mirror unit 10c will be described later referring to FIGS. 3, 4A, 4B, 4C, 5A, and 5B.

Light from the illuminating device 10 enters into a PBS (polarized beam splitter) array 12 and a condenser lens 13 via the fly-eye integrator 11. The fly-eye integrator 11 has a first fly-eye lens unit and a second fly-eye lens unit each constituted of fly-eye lenses. The fly-eye integrator 11 imparts an optical function to light to be entered from the illuminating device 10 to make uniform a light amount distribution with respect to liquid crystal panels 18, 24, and 33.

The PBS array 12 is formed by arranging a plurality of PBSs and half wavelength plates in an array to align polarization directions of light entered from the fly-eye integrator 11 in one direction. The condenser lens 13 imparts a condensing function to light entered from the PBS array 13. Light transmitted through the condenser lens 13 enters into a dichroic mirror 14.

The dichroic mirror 14 transmits solely light in a blue wavelength band (hereinafter, referred to as "B light"), and reflects light in a red wavelength band (hereinafter, referred to as "R light"), and light in a green wavelength band (hereinafter, referred to as "G light"), out of the light entered from the condenser lens 13. The B light transmitted through the dichroic mirror 14 is reflected on a mirror 15 and enters into a condenser lens 16.

The condenser lens 16 imparts an optical function to the B light so that the B light enters into the liquid crystal panel 18 as substantially parallel light. The B light transmitted through the condenser lens 16 enters into the liquid crystal panel 18 via an entering-side polarizer 17. The liquid crystal panel 18 is driven in accordance with an image signal for blue to modulate the B light depending on a driven state of the liquid crystal panel 18. The B light modulated by the liquid crystal panel 18 enters into a dichroic prism 20 via an output-side polarizer 19.

Out of the light reflected on the dichroic mirror 14, the G light is reflected on a dichroic mirror 21 and enters a condenser lens 22. The condenser lens 22 imparts an optical function to the G light so that the G light enters into the liquid crystal panel as substantially parallel light. The G light transmitted through the condenser lens 22 enters into the liquid crystal panel 24 via an entering-side polarizer 23. The liquid crystal panel 24 is driven in accordance with an image signal for green to modulate the G light depending on an driven state of the liquid crystal panel 24. The G light modulated by the liquid crystal panel 24 enters into the dichroic prism 20 via an output-side polarizer 25.

The R light transmitted through the dichroic mirror 21 enters into a condenser lens 26. The condenser lens 26 imparts an optical function to the R light so that the R light enters into the liquid crystal panel 33 as substantially parallel light. The R light transmitted through the condenser lens 26 propagates along an optical path constituted of relay lenses 27, 29, and 31, and mirrors 28 and 30 for regulating an optical path length, and enters into the liquid crystal panel 33 via an entering-side polarizer 32. The liquid crystal panel 33 is driven in accordance with an image signal for red to modulate the R light depending on a driven state of the liquid crystal panel 33. The R light modulated by the liquid crystal panel 33 enters into the dichroic prism 20 via an output-side polarizer 34.

The dichroic prism 20 combines the B light, the G light, and the R light modulated by the liquid crystal panels 18, 24, and 33 for incidence into a projection lens 35. The projection lens 35 includes a lens group for forming an image of projected light onto a projection plane, and an actuator for displacing a part of the lens group in an optical axis direction to adjust a zoom state and a focus state of the projected image. The light combined by the dichroic prism 20 is enlarged and projected onto a screen through the projection lens 3.

Next, an arrangement of the mirror unit 10c is described referring to FIGS. 3, 4A through 4C, 5A, and 5B.

FIG. 3 is an exploded perspective view of the mirror unit 10c. As shown in FIG. 3, the mirror unit 10c includes a base member 100, a mirror holder 200, an adjuster 300, a substrate 400, and a driving section 500.

The base member 100 includes an upper plate portion 101, a lower plate portion 102, a back plate portion 103, and two wall portions 104. The upper plate portion 101, the lower plate portion 102, the back plate portion 103, and the two wall portions 104 are integrally formed. A recess 105 communicated with the upper plate portion 101 is arranged between the two wall portions 104.

The upper plate portion 101 is formed with a bearing hole 106 to be engaged with a bearing 204 of the mirror holder 200, an arc-shaped guide hole 107 along which a projection 205 of the mirror holder 200 is guided, and a linear guide hole 108 communicating with the bearing hole 106 from a side surface of the upper plate portion 101. Two bosses 109 each having a boss and a screw hole are formed on the upper surface of the upper plate portion 108. The substrate 400 is mounted on the two bosses 109.

The lower plate portion 102 is aligned in parallel to the upper plate portion 101. A shaft hole 110 to be engaged with a shaft 203 of the mirror holder 200 is formed in the lower plate portion 102 at a position coaxial with the bearing hole 106 of the upper plate potion 101.

A recess 111 having a contour slightly larger than the contour of the adjuster 300 is formed in the inner surfaces of the two wall portions 104 and the back plate portion 103. The adjuster 300 is fitted and screw-fastened in the recess 111. Screw holes 112 to be engaged with adjusting screws 301 are formed on the outer surfaces of the two wall portions 104, respectively. The screw holes 112 extend through the recess 111 formed on the inner surfaces of the two wall portions 104, respectively. Further, two bosses 113 each having a boss and a screw hole are formed on the outer surfaces of the two wall portions 104, respectively. A cover 506 is mounted on the two bosses 113.

The two wall portions 104 are configured in such a manner that the inner surfaces thereof are tilted at about 45° with respect to propagating directions of light from the lamps 10a and 10b, respectively, in the case where the mirror unit 10c is mounted in the optical engine shown in FIG. 2.

A mirror 201 is mounted on the mirror holder 200. A shaft 202 protrudes from the upper surface of the mirror holder 200. Likewise, the shaft 203 protrudes from the lower surface of the mirror holder 200 at a position coaxial with the shaft 202. A bearing 204 is pivotally supported on the shaft 202 about an axis of the bearing hole 106. A projection 205 is formed on the upper surface of the mirror holder 200. The projection 205 is operable to come into contact with a detection switch 401 or 402 mounted on the lower surface of the substrate 400 to turn on the detection switch 401 or 402, when the mirror holder 200 is set to a corresponding pivotal end position. A hook portion 206 is formed on the lower surface of the mirror holder 200.

The adjuster 300 is made of a thin resilient metal plate, and has such a shape that right and left plate portions 300a and 300b thereof are slightly closer to each other, as compared with the shape defined by the inner surfaces of the two wall portions 104 and the back plate portion 103.

The two detection switches 401 and 402 are mounted on the lower surface of the substrate 400. The substrate 400 is mounted on the bosses 109 by screws 403 in a state that projections of the bosses 109 are engaged in holes formed in two corners of the substrate 400, respectively. The detection switch 401 or 402 is turned on in response to being pressed by the projection 205 on the upper surface of the mirror holder 200, when the mirror holder 200 is set to a corresponding pivotal end position.

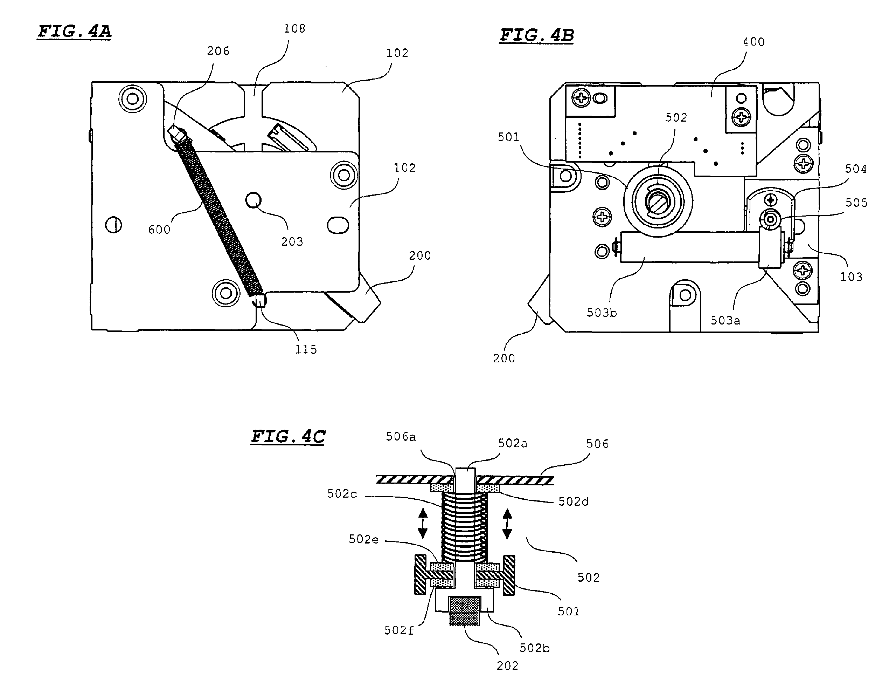

The driving section 500 includes a gear 501 equipped with a torque limiter 502, a gear 503, a motor 504, a gear 505 mounted on a drive shaft of the motor 504, and the cover 506. The gear 503 has two gear portions 503a and 503b, and shafts 503c and 503d are mounted on right and left ends of the gear 503. The cover 506 is formed with a shaft hole 506a to be engaged with a shaft 502a (see FIG. 4C) of the torque limiter 502, and shaft holes 506b and 506c to be engaged with the shafts 503c and 503d of the gear 503, respectively. The cover 506 is mounted on the bosses 113 by screws 507. In mounting the cover 506, projections 114 formed on the upper surface of the upper plate portion 101 are engaged in two holes 506d formed in the cover 506, respectively.

In assembling the mirror unit 10c, first, the adjuster 300 is mounted in the recess 111. Specifically, a middle portion of the adjuster 300 is screw-fastened to the back plate portion 103 in a state that the adjuster 300 is fitted in the recess 111. As described above, the adjuster 300 has such a shape that the right and left plate portions 300a and 300b are slightly closer to each other, as compared with the shape defined by the inner surfaces of the two wall portions 104 and the back plate portion 103. Accordingly, screw-fastening the middle portion of the adjuster 300 in the recess 111 presses the adjuster 300 against the recess 111 by flexure of the right and left plate portions 300a and 300b. In this state, the surface of the adjuster 300 is rendered substantially flush with the inner surfaces of the two wall portions 104 and the back plate portion 103.

Thereafter, the two adjusting screws 301 are engaged in the screw holes 112. As the rotations of the adjusting screws 301 are advanced, the tips of the adjusting screws 301 come into contact with the inner surface of the adjustor 300. Then, as the rotations of the adjusting screws 301 are further advanced, the adjustor 300 is flexed while being pressed by the tips of the adjusting screws 301. Adjusting the rotation amounts of the two adjusting screws 301 enables to adjust displacement amounts of the right and left plate portions 300a and 300b.

Then, the mirror holder 200 is mounted on the base member 100 as follows. Specifically, the projection 205 is guided through the guide hole 108 formed in the upper plate portion 101 along the guide hole 107, and the shaft 202 at a lower portion of the bearing 204 is guided to the bearing hole 106 through the guide hole 108. Then, the shaft 203 is engaged in the shaft hole 110 of the lower plate portion 102 by moving the mirror holder 200 downwardly, and the bearing 204 is engaged in the bearing hole 106. Accordingly, the mirror holder 200 is pivotally mounted between the upper plate portion 101 and the lower plate portion 102.

Thereafter, the driving section 500 is mounted. First, the shaft 202 of the mirror holder 200 is mounted on the torque limiter 502. Then, the motor 504 is mounted on the back plate portion 103 in such a manner that the motor 504 is housed in the recess 105. Further, the gear 503 is mounted in the cover 506 by engaging the shafts 503c and 503d in the shaft holes 506b and 506c, respectively. After that, the cover 506 is fastened to the bosses 113 by the screws 507 so that the gear portions 503a and 503b are respectively engaged with the gears 505 and 501.

Thereafter, the substrate 400 is screw-fastened to the bosses 109. In this state, the two detection switches 401 and 402 mounted on the substrate 400 are positioned near each end of the guide hole 107.

Finally, as shown in FIG. 4A, a coil spring 600 is mounted on the backside surface of the lower plate portion 102. FIGS. 4A and 4B are respectively a bottom plan view and a top plan view of the mirror unit in an assembled state. To simplify the description, the cover 506 is not illustrated in FIG. 4B.

The coil spring 600 is mounted on the mirror unit 10c in a manner that both ends thereof are latched together with the hook portion 206 formed on the lower surface of the mirror holder 200 and a hook portion 115 formed on the backside surface of the lower plate portion 102, respectively. The positional relation between the hook portion 115 and the shaft 203 of the mirror holder 200 is as shown in FIG. 4A.

In a state shown in FIG. 4A, the hook portion 206 is pulled by the coil spring 600, and the mirror holder 200 is subjected to a counterclockwise force by the coil spring 600. Accordingly, the backside surface of the mirror holder 200 is pressed against one of the wall potions 104. In this state, if the plate portion 300a of the adjuster 300 is lifted upwardly from the recess 111 by the corresponding adjusting screw 301, the backside surface of the mirror holder 200 is pressed against the plate portion 300a.

When the mirror holder 200 is pivotally rotated clockwise from the state shown in FIG. 4A, and the position of the hook portion 206 passes a straight line connecting the hook portion 115 and the axis of the shaft 203, the mirror holder 200 is subjected to a clockwise force by the coil spring 600. Thereafter, when the mirror holder 200 is pivotally rotated clockwise, and the backside surface of the mirror holder 200 comes into contact with the other one of the wall portions 104, the backside surface of the mirror holder 200 is pressed against the other one of the wall portions 104 by a tension force of the coil spring 600. In this state, if the plate portion 300b of the adjuster 300 is lifted upwardly from the recess 111 by the corresponding adjusting screw 301, the backside surface of the mirror holder 200 is pressed against the plate portion 300b.

The pivotal end position of the mirror holder 200 may be adjusted by a lifting amount of the plate portion 300a, 300b by the corresponding adjusting screw 301. In the case where the mirror unit 10c is mounted in the optical engine shown in FIG. 2, the lifting amounts of the plate portions 300a and 300b by the respective corresponding adjusting screws 301 are adjusted so that both of the light from the lamps 10a and 10b are properly directed to the fly-eye integrator 11.

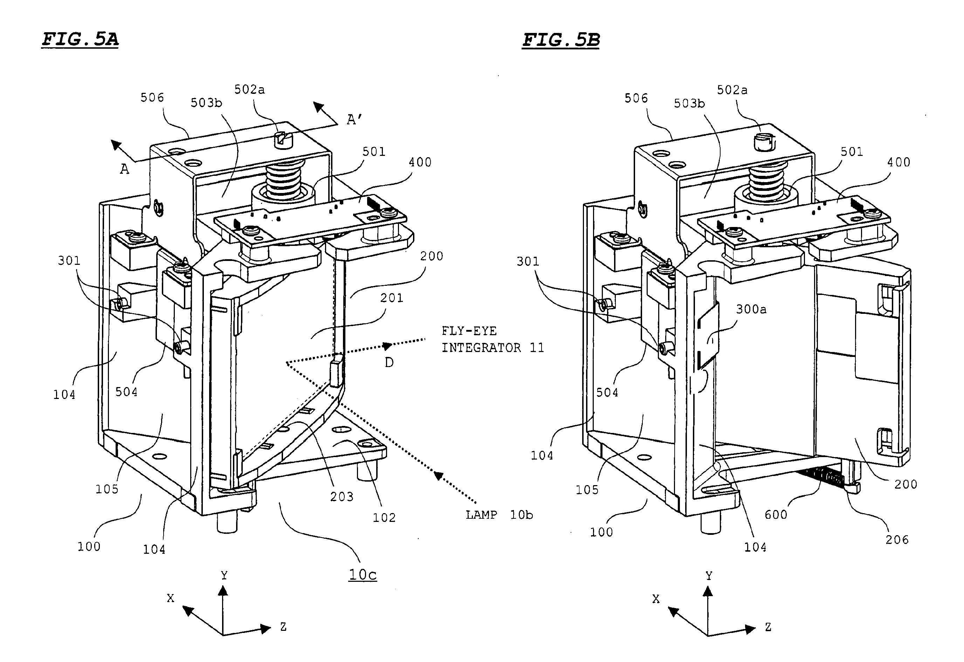

FIG. 4C is a sectional view showing an arrangement of the torque limiter 502. FIG. 4C is a sectional view taken along a line A-A' , showing the torque limiter 502 and peripheral parts thereof in an assembled state shown in FIG. 5A.

The torque limiter 502 includes a shaft 502a having a bearing 502b at a lower end thereof, a coil spring 502c, and three washers 502d, 502e, and 502f. The bearing 502b is engaged with the shaft 202 of the mirror holder 200. An upper end of the shaft 202 has such a shape that a part of a cylindrical column is cut away into a planar shape, and the inner surface of the bearing 502b has such a shape as to be engaged with the upper end of the shaft 202.

The gear 501 has an H-shape in section, and a hole slightly larger than the shaft 502a is formed in the center of the gear 501. The shaft 502a is received in the hole of the gear 501. The gear 501 is vertically interposed between the washers 502e and 502f. An upper end of the shaft 502a is engaged in the shaft hole 506a of the cover 506, as described above. The coil spring 502c is mounted between the cover 506 and the washer 502e via the washer 502d. The coil spring 502c is mounted between the washers 502d and 502e in a compressed state. Accordingly, the gear 501 is pressed against the upper surface of the bearing 502b by the coil spring 502c.

In the above arrangement, when the gear 501 is rotated, the shaft 502a is rotated by a frictional force between the gear 501 and the washer 502e, and a frictional force between the gear 501 and the washer 502f. Accordingly, the shaft 202 engaged with the bearing 502b is pivotally rotated, and the mirror holder 200 is pivotally rotated accompanied by the pivotal rotation of the shaft 202. On the other hand, for instance, in the case where the gear 501 is further rotated after the backside surface of the mirror holder 200 comes into contact with the adjuster 300, the gear 501 slips with respect to the washer 502e and the washer 502f, and solely the gear 501 is rotated. Thus, the torque limiter 502 transmits a driving force of the gear 501 to the shaft 202 exclusively in the range of a static frictional force between the gear 501 and the washer 502f.

FIGS. 5A and 5B are diagrams showing an arrangement of the mirror unit 10c in an assembled state. As shown in FIG. 5A, the mirror unit 10c is constructed in such a manner that the mirror 201 faces the lamp 10b when the backside surface of the mirror holder 200 is contacted with the plate portion 300a of the adjuster 300. In this state, light from the lamp 10b is reflected on the mirror 201 in D direction, and guided to the fly-eye integrator 11. In the state shown in FIG. 5A, the mirror 201 is tilted at about 45° in X-Z plane direction with respect to the propagating direction of light from the lamp 10b. Further, the shafts 202 and 203 of the mirror holder 200 are aligned in parallel to Z axis.

As shown in FIG. 5B, when the mirror holder 200 is pivotally rotated from the above state to a position where the backside surface of the mirror holder 200 is contacted with the plate portion 300b (not shown in FIG. 5B) of the adjuster 300, the mirror 201 is positioned to a position facing the lamp 10a. Similarly to the state shown in FIG. 5A, in this state, light from the lamp 10a is reflected on the mirror 201 in D direction, and guided to the fly-eye integrator 11. In this state, the mirror 201 is tilted at about 45° in X-Z plane direction with respect to the propagating direction of light from the lamp 10a.

As described above, the reflecting direction of light from the mirror 201 can be adjusted by adjusting the adjusting screws 301. In the case where the mirror unit 10c is mounted in the optical engine 2, the adjusting screws 301 are adjusted so that both of the light from the lamps 10a and 10b is directed in D direction and properly enters into the fly-eye integrator 11.

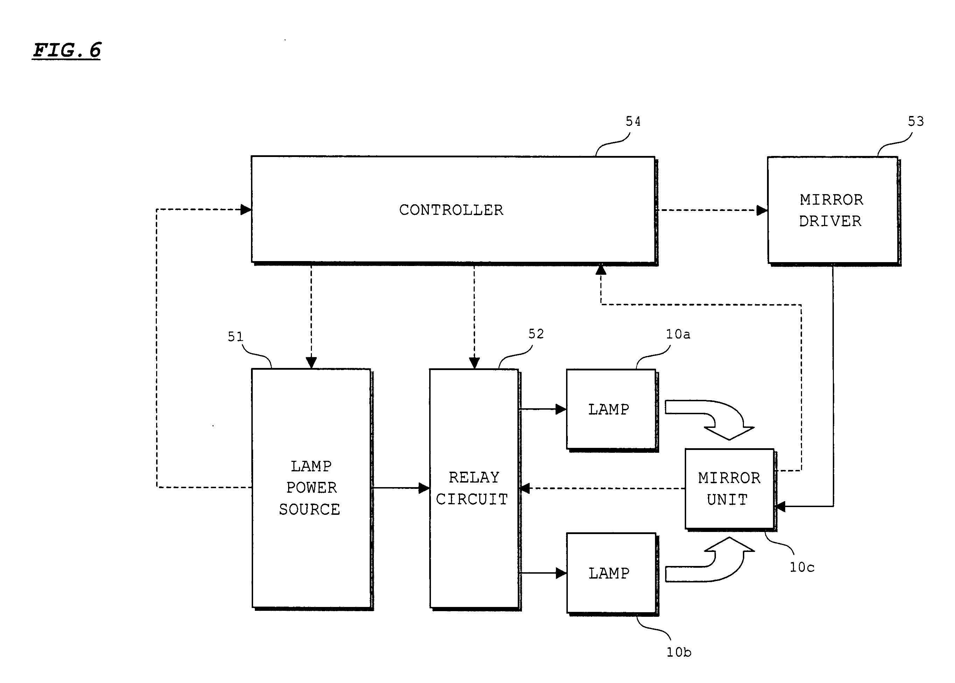

FIG. 6 is a diagram showing a circuit configuration of the projector in this embodiment. In FIG. 6, merely an arrangement relating to the lamps 10a and 10b, and the mirror unit 10c is illustrated, and illustration of the other arrangement is omitted.

A lamp power source 51 supplies an electric power for driving a lamp to a relay circuit 52 in accordance with a control signal from a controller 54. Further, the lamp power source 51 monitors a drive current to be applied to the lamp, judges whether the lamp is short-circuited or not, and supplies the judgment result to the controller 54.

The relay circuit 52 supplies the electric power from the lamp power source 51 to a lamp designated by the controller 54, out of the lamps 10a and 10b. A signal from the detection switch 401 or 402 mounted on the mirror unit 10c is inputted to the relay circuit 52. In the case where the mirror 201 in the mirror unit 10c faces the lamp 10a, the detection switch 401 is turned on, and an ON-signal is inputted from the detection switch 401 to the relay circuit 52. On the other hand, in the case where the mirror 201 faces the lamp 10b, the detection switch 402 is turned on, and an ON-signal is inputted from the detection switch 402 to the relay circuit 52.

The relay circuit 52 is configured in such a manner that: supply of an electric power from the lamp power source 51 to the lamp 10a is suspended if an ON-signal is not inputted from the detection switch 401, even if a control signal for supplying an electric power to the lamp 10a is inputted from the controller 54; and similarly to the above, supply of an electric power from the lamp power source 51 to the lamp 10b is suspended if an ON-signal is not inputted from the detection switch 402, even if a control signal for supplying an electric power to the lamp 10b is inputted from the controller 54.

Amirror driver 53 drives the mirror unit 10c in accordance with a control signal from the controller 54. When the mirror unit 10c is driven, the controller 54 monitors signals from the detection switches 401 and 402 provided in the mirror unit 10c. Then, in response to input of an ON-signal from the detection switch corresponding to a targeted driving direction, the controller 54 continues to supply a control signal for driving the mirror 201 in the targeted driving direction to the mirror driver 53 for a predetermined period. Accordingly, the mirror 201 is securely positioned to a predetermined switching position.

Once the above control is executed, the motor 504 is continued to be driven after the backside surface of the mirror holder 200 comes into contact with the adjuster 300. In this arrangement, since the driving force of the motor 504 is absorbed by the torque limiter 502 as described above, there can be prevented a drawback such as a damage of the motor 504 resulting from overload, or an angle displacement of the mirror 201 resulting from distortion of the mirror holder 200.

In the arrangement of FIG. 6, if one of the lamps is short-circuited while driving that lamp, a signal indicating the short-circuited condition is inputted from the lamp power source 51 to the controller 54. In response to receiving the signal, the controller 54 suspends power supply to the lamp power source 51, and then, supplies, to the mirror driver 53, a control signal for pivotally moving the mirror 201 to such a position that light from the other lamp is reflected. Accordingly, the mirror 201 is pivotally moved.

Thereafter, when the mirror 201 is pivotally moved and reached at a proper position, one of the detection switches 401 and 402 supplies an ON-signal to the controller 54. Upon lapse of the predetermined period after receiving the ON-signal, the controller 54 outputs a control signal indicating start of power supply to the lamp power source 51, and simultaneously, outputs, to the relay circuit 52, a control signal for supplying an electric power to the other one of the lamps. Accordingly, the other one of the lamps is turned on to resume image projection.

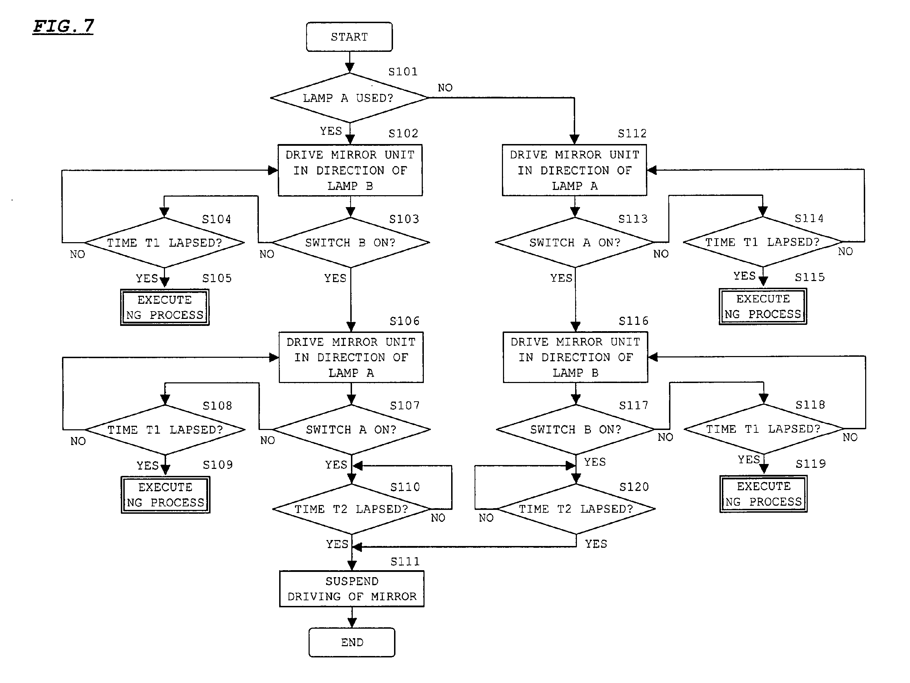

Next, there is described activation control of the mirror unit in starting image projection after the projector is activated by referring to FIG. 7. In this embodiment, the lamp which has been used in a previous operation is also used in a current operation. Accordingly, the mirror 201 in the mirror unit 10c faces the lamp which has been used in the previous operation.

In the following, to simplify the description, the two lamps are called as the lamp A and the lamp B, and the pivotal directions of the mirror to face the lamp A and the lamp B are called as the direction of lamp A and the direction of lamp B, respectively. Also, the detection switch which is turned on in response to pivotal movement of the mirror 201 in the direction of lamp A is called as the switch A, and the detection switch which is turned on in response to pivotal movement of the mirror 201 in the direction of lamp B is called as the switch B, out of the detection switches 401 and 402.

After the projector is activated, in response to user's input for image projection, the controller 54 judges whether the lamp A or the lamp B is to be used in a current operation (Step S101). If it is judged that the lamp A is to be used (YES in Step S101), the controller 54 drives the mirror unit 10c in the direction of lamp B (Step S102). Then, the controller 54 judges whether an ON-signal has been inputted from the switch B before a time T1 elapsed after driving of the mirror unit 10c (Steps S103 and S104). If it is judged that an ON-signal has not been inputted from the switch B before the time T1 elapsed (NO in Step S103 and YES in Step S104), the controller 54 judges that the operation of the mirror unit 10c is improper, and executes an NG process (Step S105).

If, on the other hand, it is judged that an ON-signal has been inputted from the switch B before the time T1 elapsed (YES in Step S103), the controller 54 drives the mirror unit 10c in the direction of lamp A (Step S106). Then, the controller 54 judges whether an ON-signal has been inputted from the switch A before the time T1 elapsed after driving of the mirror unit 10c (Steps S107 and S108). If it is judged that an ON-signal has not been inputted from the switch A before the time T1 elapsed (NO in Step S107 and YES in Step S108), the controller 54 judges that the operation of the mirror unit 10c is improper, and executes an NG process (Step S109). Accordingly, the projector is set to a standby state.

If, on the other hand, it is judged that an ON-signal has been inputted from the switch A before the time T1 elapsed (YES in Step S107), the controller 54 further drives the mirror unit 10c in the direction of lamp A for a time T2 (Step S110). Upon lapse of the time T2 (YES in Step S110), the controller 54 suspends driving of the mirror unit 10c (Step S111), and terminates activation control of the mirror unit 10c. Thereafter, the lamp A is turned on to project an image.

If it is judged that the lamp B is to be used in the current operation in Step S101 (NO in Step S101), the controller 54 drives the mirror unit 10c in the direction of lamp A (Step S112). Then, the controller 54 judges whether an ON-signal has been inputted from the switch A before the time T1 elapsed after driving of the mirror unit 10c (Steps S113 and S114). If it is judged that an ON-signal has not been inputted from the switch A before the time T1 elapsed (NO in Step S113 and YES in Step S114), the controller 54 judges that the operation of the mirror unit 10c is improper, and executes an NG process (Step S115). Accordingly, the projector is set to a standby state.

If, on the other hand, it is judged that an ON-signal has been inputted from the switch A before the time T1 elapsed (YES in Step S113), the controller 54 drives the mirror unit 10c in the direction of lamp B (Step S116). Then, the controller 54 judges whether an ON-signal has been inputted from the switch B before the time T1 elapsed after driving of the mirror unit 10c (Steps S117 and S118). If it is judged that an ON-signal has not been inputted from the switch B before the time T1 elapsed (NO in Step S117 and YES in Step S118), the controller 54 judges that the operation of the mirror unit 10c is improper, and executes an NG process (Step S119).

When it is judged that an ON-signal has been inputted from the switch B before the time T1 elapsed (YES in Step S117), the controller 54 further drives the mirror unit 10c in the direction of lamp B for the time T2 (Step S120). Upon lapse of the time T2 (YES in Step S120), the controller 54 suspends driving of the mirror unit 10c (Step S111), and terminates activation control of the mirror unit 10c. Thereafter, the lamp B is turned on to project an image.

Controlling the activating operation of the mirror unit 10c, as described above, enables to tilt the mirror 201 at a proper angle with respect to light from the lamp 10a, 10b in starting a projection. For instance, the mirror 201 may be displaced from a proper angle resulting from application of an external force to the mirror holder 200, while the projector is transported from a site where the projector was used in a previous operation to a site where the projector is to be used in a current operation. In such an occasion, by performing the activation control shown in FIG. 7, the mirror holder 200 is temporarily swung to a position opposite to the position to be used in the current operation, before projection is started, and thereafter, the mirror holder 200 is returned to the position to be used in the current operation, and is pressed against the adjuster 300. This enables to position the mirror 201 at a proper angle with respect to light from the lamp to be used in the current operation.

Further, referring back to the flowchart of FIG. 7, an NG process is also executed in the case where pivotal movement of the mirror 201 to the position where the other one of the lamps is used is disabled (YES in Step S104 or YES in Step S114), in addition to the case where positioning of the mirror 201 to a position where the targeted lamp is used is disabled (YES in Step S108 or YES in Step 118). In this case, since a projection is inhibited by the NG process, the user can be notified that a failure has occurred in the projector. Then, the user can find the failure relating to the mirror unit by checking the projector, and take a proper measure to remove the failure. In this arrangement, it is preferable to output an alert relating to the failure to securely notify the user of the failure relating to the mirror unit.

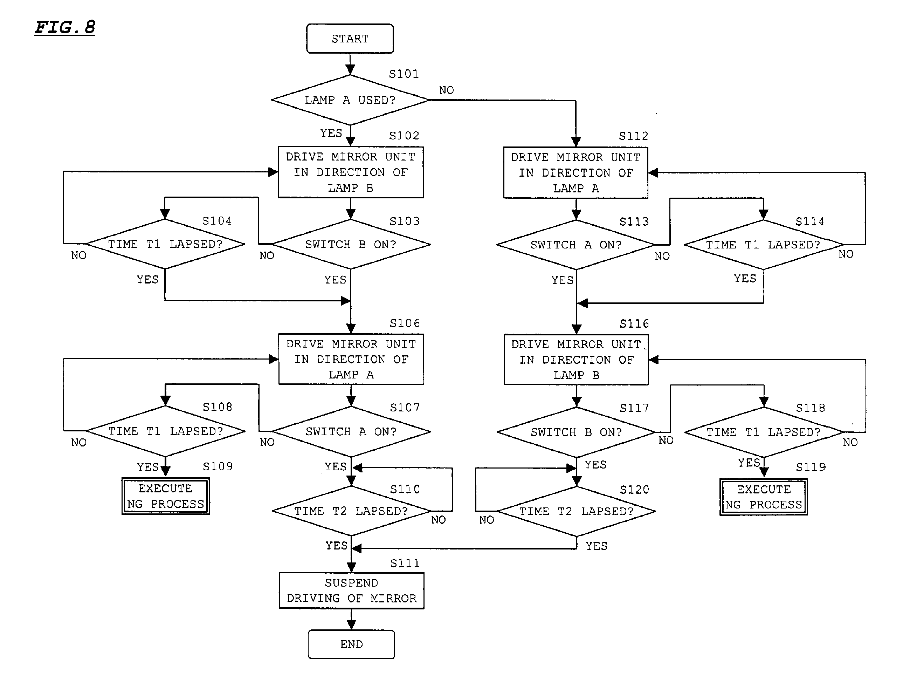

In the flowchart of FIG. 7, upon lapse of the time T1 in Step S104 or S114 before the switch B is turned on in Step S103, or the switch A is turned on in Step S113, the NG process is executed based on a judgment that the operation of the mirror unit 10c is improper. Alternatively, as shown in FIG. 8, upon lapse of the time T1 in Step S104 or S114, the routine may proceed to Step S106 or S116 to return the mirror 201 to the position corresponding to the lamp to be used. In the modification, there is a likelihood that the mirror holder 200 may be kept unmoved despite the operation in Step S102 or S112. In such a case, it is necessary to execute an NG process. In view of the above, in the flowchart of FIG. 8, it is necessary to judge whether the switch A and the switch B are respectively changed from an OFF state to an ON state in Steps S107 and S117 to handle the above case.

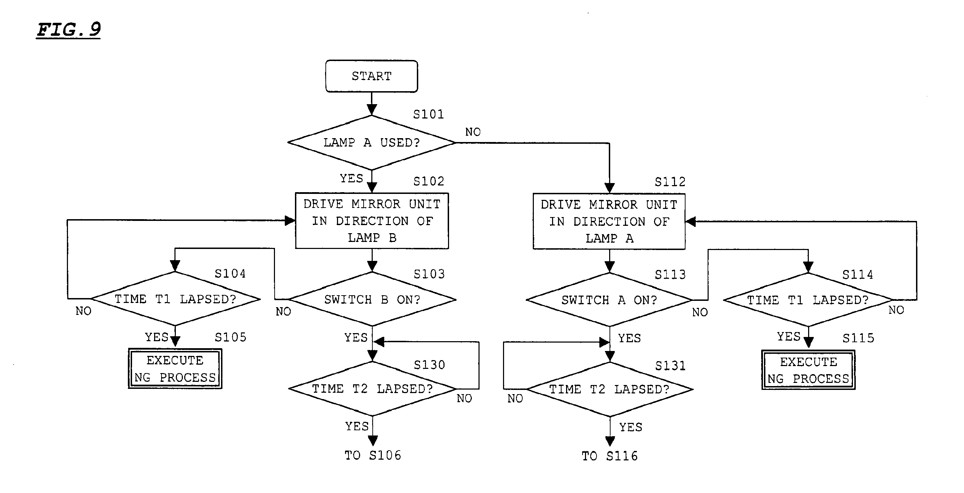

Further, in the flowchart of FIG. 7, in response to a judgment result indicating that the switch B is turned on in Step S103, or the switch A is turned on in Step S113, the routine proceeds to Step S106 or Step S116 to return the mirror 201 to the position corresponding to the lamp to be used. Alternatively, as shown in FIG. 9, Steps S130 and S131 may be added after Steps S103 and S113, respectively, to continue driving of the mirror unit for the time T2 after the switch B or the switch A is turned on to press the mirror holder 200 against the adjuster 300 at a position opposite to the position corresponding to the lamp to be used. The modification enables to coincide the process routine for moving the mirror holder 200 to the position opposite to the position corresponding to the lamp to be used, with the process routine for moving the mirror holder 200 to the position corresponding to the lamp to be used, thereby simplifying the process routine.

Further alternatively, Steps S130 and S131 shown in FIG. 9 may be included in the flowchart of FIG. 8. In this case, Steps S130 and S131 are included after Steps S103 and S113, respectively, and if the judging results in Steps S104 and S114 are YES, the routine proceeds to Steps S106 and S116, respectively.

As described above, according to the embodiment, the mirror holder 200 is temporarily swung to the position opposite to the position to be used in the current operation before a projection is started, and thereafter the mirror holder 200 is returned to the position to be used in the current operation, and is pressed against the adjuster 300. This enables to position the mirror 201 at a proper angle with respect to light from the lamp to be used in the current operation.

Further, according to the embodiment, since the driving force for pressing the mirror holder 200 against the adjuster 300 is absorbed by the torque limiter 502, there can be prevented a drawback such as a damage of the motor 504 resulting from overload, or an angle displacement of the mirror 201 resulting from distortion of the mirror holder 200.

Furthermore, according to the embodiment, since the mirror holder 200 is pivotally supported on the integrally molded base member 100, positional displacement or axial displacement of the mirror holder 200 is less likely to occur, as compared with an arrangement that the base member 100 is constituted of a plurality of constituent parts, and the mirror holder 200 is mounted on the base member 100, while assembling the constituent parts into the base member 100. Accordingly, the mirror 201 can be also precisely positioned to the position corresponding to the lamp 10b shown in FIG. 5A, or the position corresponding to the lamp 10a shown in FIG. 5B.

Furthermore, according to the embodiment, since the motor 504 is housed in the recess 105 formed in the base member 100, protrusion of the motor 504 out of the outer contour of the base member 100 can be prevented. Accordingly, the mirror unit 10c can be miniaturized and made compact.

Furthermore, according to the embodiment, a transmission mechanism constituted of the gear 501, the torque limiter 502, the gear 503, and the cover 506 is provided on the upper plate portion 101 communicating with the recess 105. Accordingly, as described in FIG. 3, the transmission mechanism can be mounted at a position near the motor 504 for easy connection with the motor 504. Accordingly, the transmission mechanism can be easily mounted on the base member 100.

Furthermore, according to the embodiment, since the substrate 400 is mounted on the upper plate portion 101 having the transmission mechanism, the substrate 400 can be mounted while mounting the transmission mechanism. Accordingly, an assembling operation of the mirror unit 10c can be further facilitated.

In the above arrangement, the detection switches 401 and 402 for detecting a pivotal position of the mirror holder 200 are mounted on the substrate 400 at such positions that the detection switches 401 and 402 face the right and left pivotal end positions of the guide hole 107 when the substrate 400 is mounted on the bosses 109. According to the embodiment, the detection switches 401 and 402 can be easily arranged at the predetermined positions on the base member 100.

Besides, according to the embodiment, since the lifting amounts of the plate portions 300a and 300b of the adjuster 300 can be adjusted by the adjusting screws 301, respectively, the tilt angle of the mirror 201 can be easily adjusted so that the mirror 201 is tilted at a proper angle with respect to light from the lamp 10a, 10b.

The embodiment of the present invention has been described as above, but the present invention is not limited to the foregoing embodiment. Further, the embodiment of the present invention may be modified in various ways other than the above.

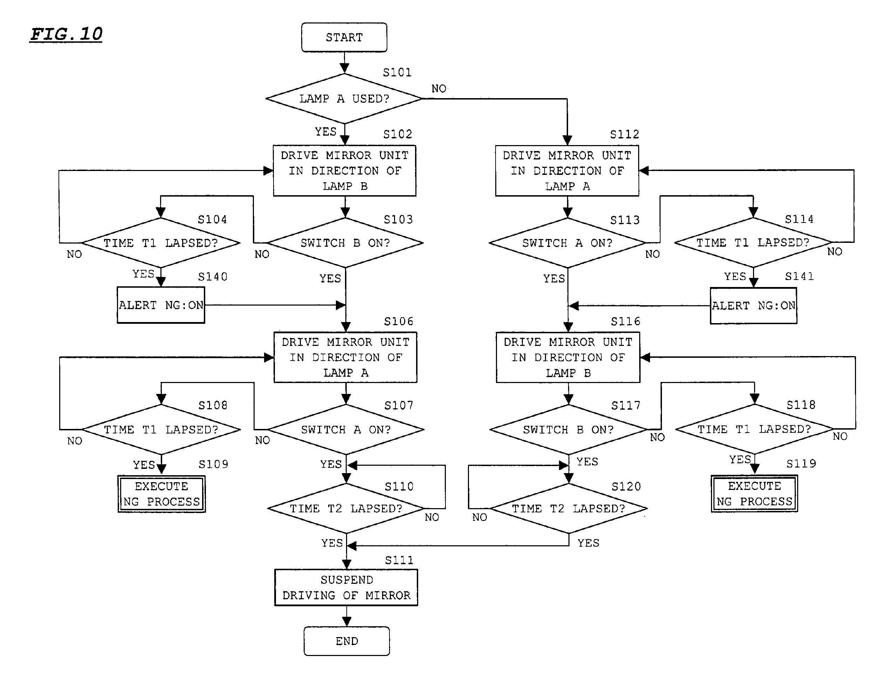

For instance, in the flowchart of FIG. 8, even in the case where pivotal movement of the mirror holder 200 to the position opposite to the position to be used in the current operation is disabled (YES in Step S104 or YES in Step S114), as far as the mirror holder 200 can be properly positioned to the position to be used in the current operation (YES in Step S110 or YES in Step S120), the routine proceeds to a projection without executing an NG process. Alternatively, as shown in FIG. 10, for instance, in the case where pivotal movement of the mirror holder 200 to the position opposite to the position to be used in the current operation is disabled (YES in Step S104, or YES in Step S114), the controller 54 may validate a process for alerting that a failure has occurred in the mirror holder, or a projection using the other lamp is disabled (Step S140 or S141), and output an alert in performing a projection after Step S111. The output of an alert may be performed by e.g. a method of including a character or a figure indicating an alert in a projected image, or a method of notifying an alert by sounds.

Thus, the user can be notified that projection cannot be continued by switching to the other one of the lamps, in the case where projection using one of the lamps has been interrupted because the one lamp has been short-circuited during the projection. Accordingly, the user can determine whether the projection should be carried on, or some measure should be taken to remove the failure relating to the mirror unit.

In the flowcharts of FIGS. 7 through 10, a control operation is performed such that the mirror holder 200 is temporarily swung to the position opposite to the position to be used in the current operation before a projection is started, then the mirror holder 200 is returned to the position to be used in the current operation, and is pressed against the adjuster 300. Alternatively, the mirror holder 200 may be directly driven to the position to be used in the current operation and pressed against the adjuster 300, without being temporarily swung to the position opposite to the position to be used in the current operation.

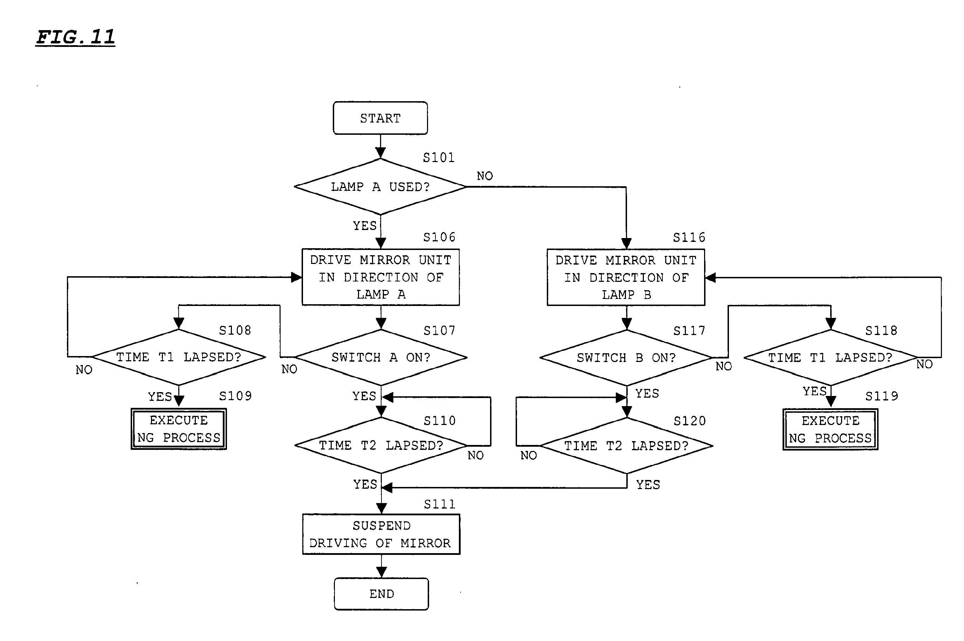

FIG. 11 is a diagram showing a flowchart of the above modification. In the flowchart shown in FIG. 11, Steps S102 through S105, and S112 through S115 in the flowchart of FIG. 7 are omitted, and the routine proceeds to Step S106 or S116 from the judgment step in Step S101. Steps after Step S106 or S116 are the same as the corresponding steps in the flowchart of FIG. 7.

In the flowchart of FIG. 11, similarly to the flowchart of FIG. 7, the mirror holder 200 is driven to the position to be used in the current operation and pressed against the adjuster 300 before a projection is started. Accordingly, the mirror 201 can be positioned at a proper angle with respect to light from the lamp to be used in the current operation. In this modification, similarly to the above, since the driving force for pressing the mirror holder 200 against the adjuster 300 is absorbed by the torque limiter 502, there can be prevented a drawback such as a damage of the motor 504 resulting from overload, or an angle displacement of the mirror 201 resulting from distortion of the mirror holder 200.

In the embodiment, the recess 105 is communicated solely with the upper plate portion 101. Alternatively, the recess 105 may also be communicated with the lower plate portion 102. In the embodiment, the transmission mechanism constituted of various gears, and the substrate 400 are mounted on the upper plate portion 101. Alternatively, the recess 105 may extend to the lower plate portion 102, and the transmission mechanism and the substrate 400 may be mounted on the lower plate portion 102.

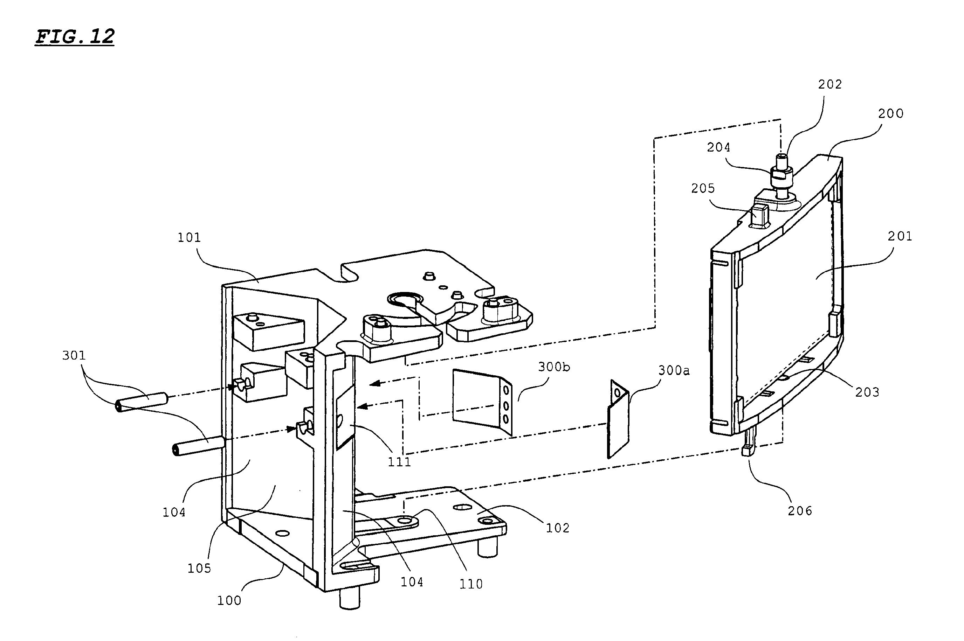

In the embodiment, the adjuster 300 integrally formed with the plate portions 300a and 300b is mounted on the base member. Alternatively, as shown in FIG. 12, the plate portions 300a and 300b may be formed as individual parts, and attached to the two wall portions 104, respectively.

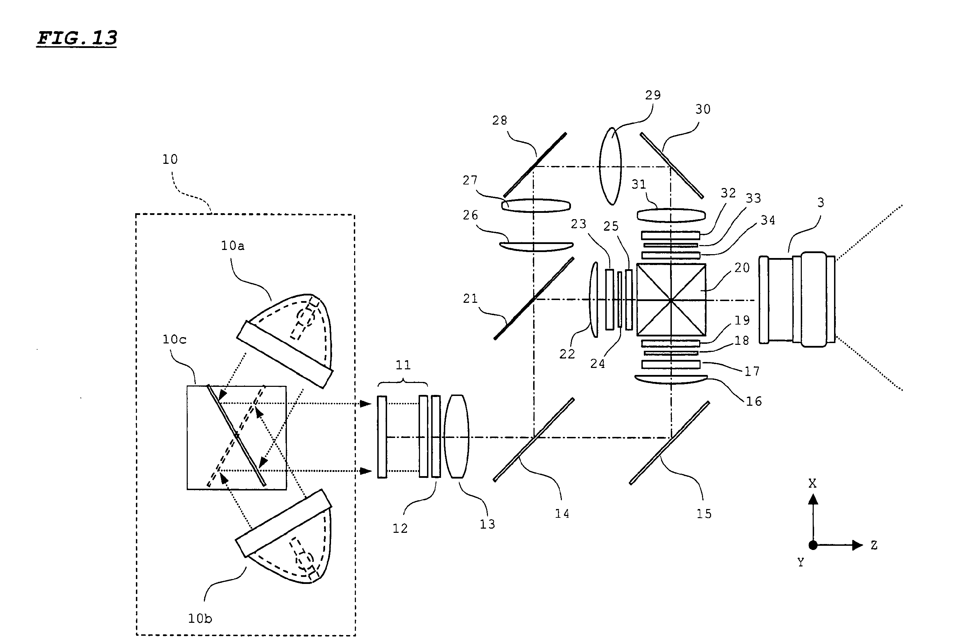

In the embodiment, the optical engine 2 is configured in such a manner that the lamps 10a and 10b face to each other. Alternatively, for instance, as shown in FIG. 13, the optical engine 2 may be configured in such a manner that light from the lamp 10a, 10b enters into the mirror unit 10c in a tilted direction with respect to X direction.

In the embodiment, the detection switches 401 and 402 are mounted at such positions that the detection switch 401, 402 is turned on when the mirror holder 200 is set to a corresponding pivotal end position. Alternatively, the detection switches 401 and 402 may be arranged at such positions that the detection switch 401, 402 is turned on when the mirror holder 200 is set to a certain pivotal position on the way to the corresponding pivotal end position. In this modification, the time T2 in the flowcharts of FIGS. 7 through 11 is set longer than the time T2 in the above embodiment by the time corresponding to a difference in arrangement position of the detection switch 401, 402 between the embodiment and the modification.

In the embodiment, the torque limiter 502 is interposed between the gear 501 and the shaft 202. Alternatively, the gear 501 and the shaft 202 may be directly connected with each other. In this modification, however, it is necessary to provide a measure of e.g. shortening a period of the mirror holder 200 being pressed against the adjuster 300 to prevent a drawback such as a damage of the motor 504 resulting from overload, or an angle displacement of the mirror 201 resulting from distortion of the mirror holder 200.

The embodiment of the present invention may be changed or modified in various ways as necessary, as far as such changes and modifications do not depart from the scope of the claims of the present invention hereinafter defined.

## Claims

1. An image display device comprising:
an illuminating device;
an imager for modulating illumination light generated by the illuminating device in accordance with an image signal;
a light guiding optical system for guiding the illumination light from the illuminating device to the imager; and
a controller for controlling the illuminating device, wherein
the illuminating device including:
a first light source for emitting first light;
a second light source for emitting second light, and disposed at such a position as to overlap the second light with the first light; and
a mirror unit for supplying one of the first light and the second light to the light guiding optical system as the illumination light, wherein
the mirror unit pivotally supports a mirror,
the mirror is disposed at such a position that the first light and the second light are overlapped with each other, and is pivotally moved between a first position where the first light is reflected in a targeted direction as the illumination light, and a second position where the second light is reflected in the targeted direction as the illumination light,
the mirror unit defines a range between the first position and the second position, as a pivotal range of the mirror, and
the controller causing the mirror to pivotally move toward the second position before the first light source is activated, and then causing the mirror to pivotally move toward the first position to position the mirror to the first position.

2. The image display device according to claim 1, wherein
the controller suspends an operation of the mirror unit, if it is judged that the mirror has not reached a predetermined detection position when pivotally moved toward the second position, and outputs an alert indicating that proper pivotal movement of the mirror toward the second position is disabled.

3. The image display device according to claim 1, wherein
the controller causes the mirror to pivotally move toward the first position to position the mirror to the first position, if it is judged that the mirror has not reached a predetermined detection position when pivotally moved toward the second position, and outputs an alert indicating that proper pivotal movement of the mirror toward the second position is disabled.

4. The image display device according to any one of claims 1 through 3, wherein
the controller causes the mirror to continue the pivotal movement thereof during a predetermined period after the mirror has reached the first position, in pivotally moving the mirror toward the first position to position the mirror to the first position.

5. The image display device according to claim 4, wherein
the mirror unit includes a transmission mechanism for transmitting a driving force from a drive source to the mirror, and
the transmission mechanism has a torque limiter.

6. An image display device comprising:
an illuminating device;
an imager for modulating illumination light generated by the illuminating device in accordance with an image signal;
a light guiding optical system for guiding the illumination light from the illuminating device to the imager; and
a controller for controlling the illuminating device,
the illuminating device including:
a first light source for emitting first light;
a second light source for emitting second light, and disposed at such a position as to overlap the second light with the first light; and
a mirror unit for supplying one of the first light and the second light to the light guiding optical system as the illumination light, wherein
the mirror unit pivotally supports a mirror,
the mirror is disposed at such a position that the first light and the second light are overlapped with each other, and is pivotally moved between a first position where the first light is reflected in a targeted direction as the illumination light, and a second position where the second light is reflected in the targeted direction as the illumination light,
the mirror unit defines a range between the first position and the second position, as a pivotal range of the mirror, and
the controller causing the mirror to pivotally move toward the first position before the first light source is activated, and then causing the mirror to continue the pivotal movement thereof during a predetermined period after the mirror has reached the first position.

7. The image display device according to claim 6, wherein
the mirror unit includes a transmission mechanism for transmitting a driving force from a drive source to the mirror, and
the transmission mechanism has a torque limiter.
